# EUROPEAN PATENT SPECIFICATION

(11) **EP 4 301 665 B1**
(45) Date of publication and mention of the grant of the patent: **15.01.2025**
(21) Application number: 22711102.8
(22) Date of filing: 25.02.2022
(51) Int. Cl.: B65D 1/02, B65D 1/09

(54) **CONTAINER MADE USING A MOULDING SYSTEM AND RELATED MANUFACTURING METHOD**
BEHÄLTER, DER UNTER VERWENDUNG EINES FORMUNGSSYSTEMS HERGESTELLT IST, UND ENTSPRECHENDES HERSTELLUNGSVERFAHREN
RÉCIPIENT FABRIQUÉ À L'AIDE D'UN SYSTÈME DE MOULAGE ET PROCÉDÉ DE FABRICATION CORRESPONDANT

(30) Priority: 02.03.2021 IT 202100004871
(43) Date of publication of application: 10.01.2024
(73) Proprietor: Brevetti Angela S.r.L., 36071 Arzignano (VI) (IT)
(72) Inventor: CONSOLARO, Roberto, 36071 ARZIGNANO (VI) (IT); CONSOLARO, Angelo, 36071 ARZIGNANO (VI) (IT); KABBUR, Rajeev, 36071 ARZIGNANO (VI) (IT)
(74) Representative: De Filippis, Sara
(86) International application number: PCT/IT2022/050033
(87) International publication number: WO 2022/185350

(56) References cited:
- GB-A- 2 322 078
- KR-B1- 102 180 246
- US-A1- 2006 144 853
- US-A1- 2017 247 128
- US-B1- 6 585 693
- US-B2- 10 456 328
- US-B2- 8 047 394
- US-B2- 9 918 900

## Description

The present invention relates to a container made using a system for moulding containers and a related manufacturing method.

Currently, various apparatuses and techniques are known for the manufacturing of vessels, containers or vials; an example is the blowing technique called Blow moulding, or the moulding technique called *"Blow Fill Seal"* (BFS).

The aforementioned BFS moulding technique consists of different consecutive steps, in detail: the step of moulding the container, called *"Blow",* the step of filling it, called *"Fill',* and the step of its hermetic closure by sealing, called *"Seal'.* According to this technique, the container body is first moulded, then loaded/filled with the desired liquid or solid content, and subsequently sealed.

In particular, to date, there are substantially two moulding methods which are based on the BFS moulding technique and which are used to manufacture the aforementioned containers.

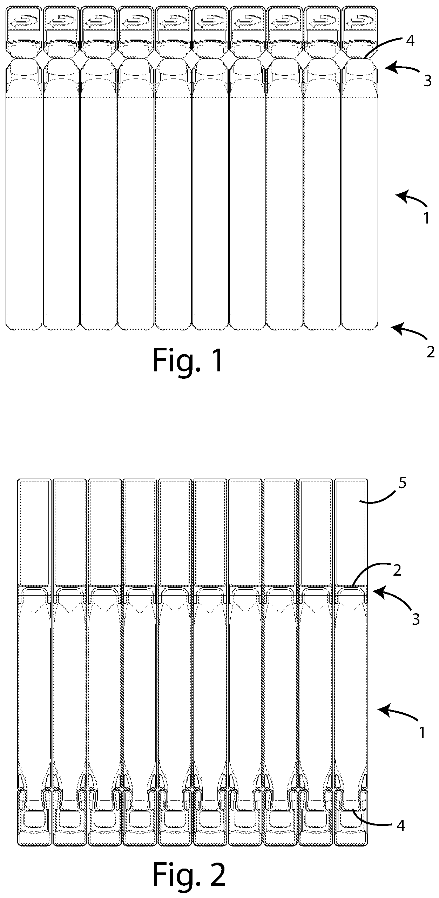

With reference to Figure 1, the first method consists in using the lower part of a forming mould, for the creation of the containment bodies 1 and the bottoms 2 of the container wherein, after the step of filling it, the mould is closed at the related upper head 3, thus making the openings 4 of the container.

With reference to Figure 2, the second method consists in using the lower part of the forming mould to create the containment bodies 1 of the container and the related opening parts 4; after the filling step, the mould is closed at the upper head 3, sealing the container at the related bottoms 2.

In particular, the container is intended as a matrix of containment bodies 1 adjacent to each other and detachable. Document KR 102180246 B1 discloses a moulded container according to the preamble of claim 1.

A problem of the aforementioned moulding/forming technique is that the shape of the containers is constrained by the volume of substance they must contain inside and, therefore, by the number of shapes of containers that can be made over a useful width of the forming mould.

In fact, nowadays, in order to optimise the number of container shapes that can be made in the moulding space, they are made with a very small interaxis from each other.

What has just been said has intrinsic limitations since, just because often there is not the necessary space to make sufficiently large dispensing spouts, the vials that are thus moulded do not allow, for example, the dispensing of large drops, or the use of connectors larger than a needle.

Therefore, the higher the number of containers that are to be made along the width of the forming mould, the narrower the interaxis between the vials and, consequently, the smaller the space available to make, for example, any labels 5, engravings, identifications, coupling points thereof, insertion of connectors etc., as visible in Figure 2.

Furthermore, on the containers thus made, it is not possible to create an opening area between the vials that is larger than their interaxis.

Within the scope of the aforementioned requirements, therefore, the main aim of the invention is to propose a container made using a system for moulding containers and a related manufacturing method, which overcomes the drawbacks of the known technique.

In particular, the aim of the invention is to manufacture a container which comprises, for example, an opening which is larger compared to the prior art and which, at the same time, is moulded in such a way as to optimise the use of the available space, to manufacture a maximum number of container shapes.

A further advantage of the present invention is to show a system for moulding containers such as to allow the manufacturing of a container which is easier to open and to empty compared to known containers having the same moulding interaxis.

Still another aim of the present invention is to realise a system for moulding containers such as to allow the creation of containers having volumes that can vary according to the request.

Last but not least, the aim of the present invention is to realise a system for moulding containers which provides and allows the making of labels, engravings, identifications and coupling points for the container itself.

These and other aims which will become clearer in the following are achieved by a container made using a system for moulding containers and a related manufacturing method, as it will become clearer in the following of the present specification.

The object of the invention is a container moulded, advantageously, from a tubular element, for example, made of plastic material, able to contain and dispense at least one solid or fluid substance.

In detail, the container object of the present invention has a longitudinal axis and comprises at least two hollow containment bodies wherein the first hollow containment body is oriented according to a first orientation direction, with respect to the aforementioned longitudinal axis. The second containment body is moulded so as to be adjacent to the first containment body, and is oriented according to a second orientation direction, opposite to the aforementioned first orientation direction of the first containment body.

Advantageously, the container object of the present invention can comprise a central or median zone of variable volume and capable of increasing the capacity of each one of the containment bodies.

Furthermore, the containment bodies comprise respective first ends, opposite to each other and corresponding to their respective opening sides, and respective second ends, opposite to the aforementioned first ends, such as to advantageously act as the bottom of the containment bodies.

Still advantageously, at the first or second ends, there may be panels that are integrally moulded therewith, preferably for the application of labels or engravings.

Furthermore, the aforementioned panels can have a substantially polygonal and flat shape and are moulded in correspondence with an empty portion between the second ends of the hollow bodies on which they are moulded, and a further empty portion at the first ends of the adjacent hollow body, in such a way to optimise the use of the moulding space.

Advantageously, each of the aforementioned containment bodies can comprise, integrally moulded therewith and at the first ends, a hollow coupling means such as to act, both as an accessory for the coupling and as a twist off tab for the opening of the containment bodies.

In addition, the containment bodies have a substantially longitudinal shape and can comprise at least a tapered portion.

Still advantageously, the aforementioned container can be moulded using the BFS or blowing technique called Blow moulding, using a system for moulding containers and a mould included therein.

In particular, the container object of the present invention, moulded using the aforementioned moulding system, can be made using a manufacturing method comprising the following steps:
- extrusion of the tubular element at the melting temperature of the material the tubular element is made of;
- insertion of the tubular element into the aforementioned mould of the moulding system;
- closing of a first end of the tubular element, to mould the container in object, so that each containment body has an orientation direction opposite to the orientation direction of the adjacent containment body; and that therefore they are in an inverted position with each other;
- moulding of the container by blowing.

In detail, the method described so far allows, advantageously, to manufacture containers that are empty inside and closed only at one end.

Furthermore, still advantageously, the method described herein can comprise a further step of closing the second end of the container, opposite to the first end of the tubular element, so that each containment body is in an inverted position with respect to the adjacent containment body.

Finally, before this last aforementioned step of closing the second end of the container, a further step of filling the container and then each hollow containment body of the aforementioned substance could be provided.

Further characteristics and advantages of the invention will become more evident from the description of a preferred, but not exclusive, embodiment of the container made using a moulding system and a related manufacturing method, according to the invention, illustrated by way of nonlimiting example, with the aid of the attached sheets of drawings, wherein:
- Figure 1 shows a front view of a first embodiment of the prior art;
- Figure 2 shows a front view of a second embodiment of the prior art;
- Figure 3A shows a front view of a first embodiment of the container, object of the present invention, in a row of two;
- Figure 3B shows a perspective view of the single containment bodies that make up the container of Figure 3A, according to the present invention;
- Figure 3C shows a front view of the container of Figure 3A, in a row comprising a plurality of containers, according to the present invention;
- Figure 4A shows a front view of a variant embodiment of the container, object of the present invention;
- Figure 4B shows a front view of the container of Figure 4A, wherein the shape of the container has a variation in volume in correspondence with the respective median zone;
- Figure 5 shows a front view of a second embodiment of the container according to the present invention;
- Figure 6A shows in a perspective view a third embodiment of the container, object of the present invention;
- Figure 6B shows a perspective view of two containers of Figure 6A, detached from each other;
- Figure 7 shows a front view of the container of Figure 3C, wherein the filling step thereof is outlined, according to the variant of the invention which provides for the BFS technique.

With reference to the aforementioned figures, generally, the container, object of the present invention, is indicated with the reference number 10. In particular, the container 10 is a matrix of containing bodies 11 adjacent to each other and individually detachable.

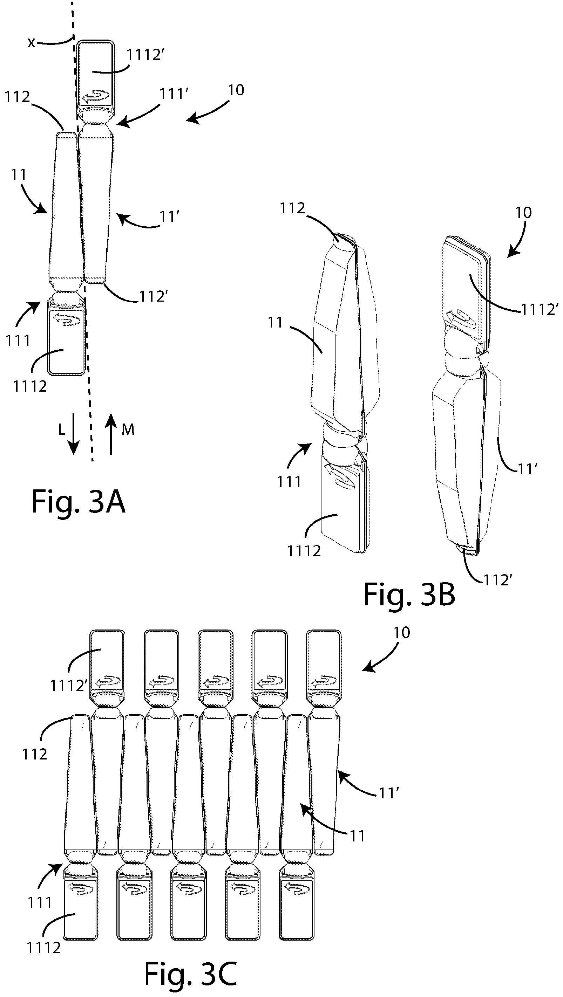

As visible in Figures 3A, 4A and 6A, the container 10, object of the present invention, advantageously has a longitudinal axis X, perpendicular thereto.

Advantageously, the moulding system, object of the present invention, comprises all the devices for manufacturing containers using the blow moulding or the BFS method and, in particular, a mould suitable for making the containers 10, from a tubular element, having at least one hollow containment body 11 such as, by way of example only, a dispensing vial.

In particular, each containment body 11 is able to contain at least one solid or fluid substance such as, for example, a product of a medical type.

Advantageously, each hollow containment body 11 can have a substantially longitudinal and tapered shape, for example, conical, and is made of tubular elements in materials for example of plastic type, such as to be subject to BFS or Blow moulding processes.

In detail, the moulding system makes it possible to manufacture a hollow body 11 having a first orientation direction L with respect to the longitudinal axis X of the container 10 (Figures 3A, 4A and 6A). By "orientation direction" or simply "orientation" of the hollow containment body 11, herein we mean the direction towards which the opening of the hollow body 11 itself faces for dispensing.

Advantageously, the containment body 11 comprising a first end 111, at the opening side of the containment body 11, and from which the substance contained therein will be dispensed, and a second end 112 at the base of the containment body 11 in object, opposite to the aforementioned first end 111, in such a way as to act as the bottom of the containment body 11.

Furthermore, in a first embodiment of the container 10 and therefore of the mould 51 making part of the moulding system, each hollow body 11 advantageously has, at the first end 111, a tab 1112 of the twist-off type which can be detached to allow its opening and the dispensing of what is contained therein, by rotating it. Advantageously, the removal through rotation of each tab 1112 from the related containment body 11 takes place individually for each hollow body 11 and therefore independently from the remaining hollow bodies 11 or 11' which constitute the container 10, facilitating the use of the containment body 11 in object.

In particular, as visible in Figures 3A and 3C, the moulding system is such as to allow, starting from each containment body 11, the moulding of the containment body 11' adjacent thereto, having a second orientation direction M (Figures 3A, 4A and 6A) opposite to the first orientation direction L for the manufacturing of the container 10.

Advantageously, this characteristic allows to have, with the same interaxis between each hollow body 11 and 11', a greater space between two openings having the same orientation compared to that obtainable according to the methods used in the prior art, optimizing the use of the useful moulding spaces.

Furthermore, the configuration with the vials tapered towards the bottom allows to also have larger openings, which allow to obtain all the advantages this brings, for example to dispense larger drops of the contained substance, this being also valid for more viscous substances, or to access with larger connectors.

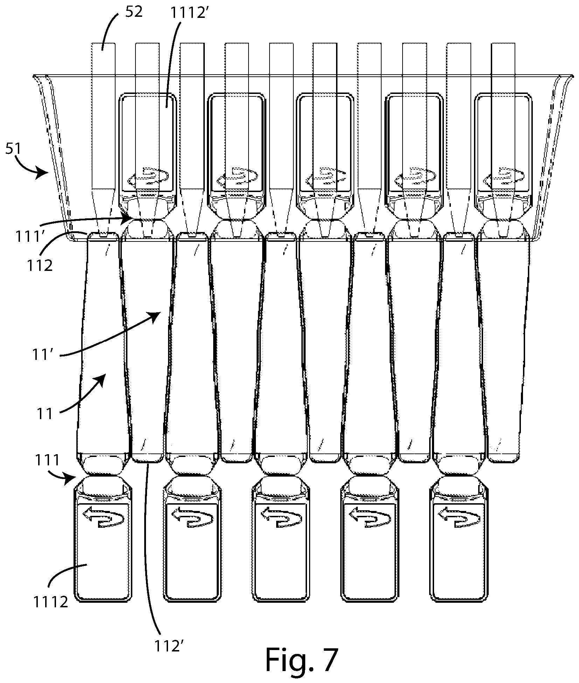

Advantageously, in the embodiment in question, and as visible in Figure 7, the mould 51 making part of the moulding system is such as to mould each containment body 11 in an overturned manner with respect to the adjacent containment body 11' consequently, the first and second ends 111 and 111', 112 and 112' respectively of each containment body 11 are inverted with each other, advantageously optimising the use of the useful moulding space available and effectively increasing the interaxis between openings facing the same direction.

More in detail, as visible in Figure 7, in order to achieve the advantages just described, the mould 51 of the moulding system in object will form, by way of example, a first containment body 11 with the opening 111 facing towards a first direction and a second containment body 11' adjacent to the first containment body 11, with the opening 111' facing towards a second direction, opposite to the first direction.

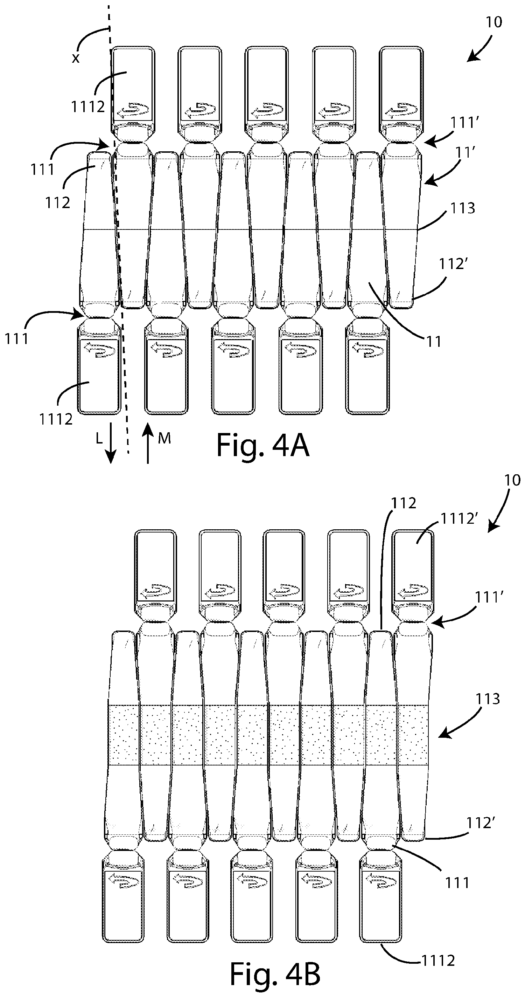

Still advantageously, in a variant embodiment of the container 10 and of the mould belonging to the moulding system, applicable to the embodiments described in the present patent application, but also to the other known configurations, as visible in Figures 4A and 4B, the mould, through a median portion of variable length, is such as to allow a variation in the volume of the container 10 in its entirety, depending on the request, by lengthening the central or median area 113 (Fig. 4B) and consequently increasing the capacity of each individual containment body 11, while not exceeding the given useful moulding space of the moulding system.

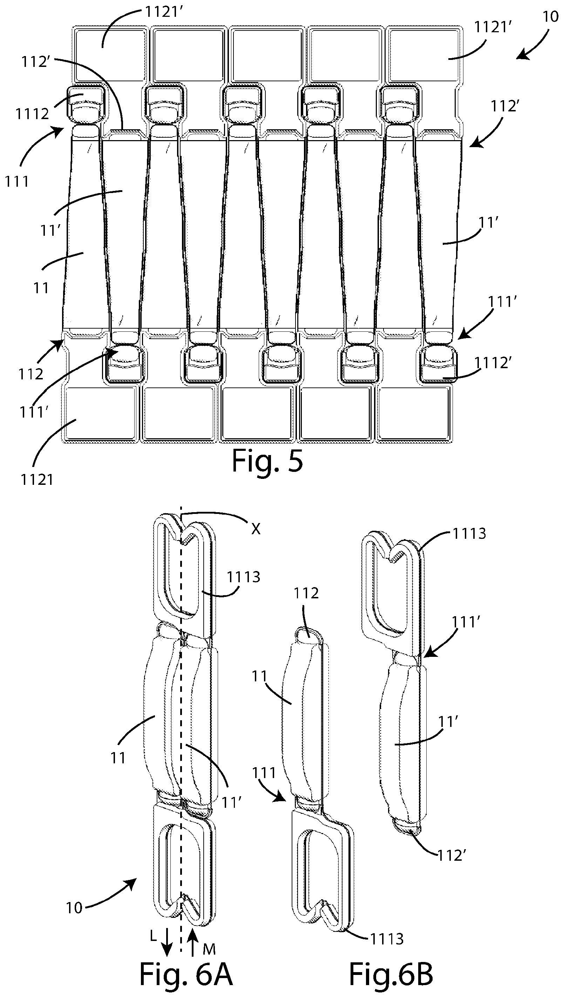

Furthermore, in a second shape of the container 10 and therefore of the mould belonging to the moulding system, as visible in Figure 5, the containing bodies 11 and 11', in addition to including what is described in the previous embodiments, comprise, at the respective second ends 112 and 112', a panel 1121 and 1121' integrally moulded therewith.

Advantageously, the aforementioned panels 1121 and 1121' have a substantially polygonal and flat shape such as to be placed and fit perfectly into the otherwise empty spaces of the mould, for example, in correspondence of the area between the second ends 112 and 112' of the hollow bodies 11 and 11', on which they are directly moulded, and the area corresponding to the first ends 111' and 111 of the hollow bodies 11' and 11 adjacent thereto, in such a way as to optimise the use of the useful moulding space, for example, for the application of labels, engravings, etc.

Furthermore, as visible in Figure 6, in a third embodiment of the container 10, the containment bodies 11 and 11' comprise, at their first ends 111 and 111', and integrally moulded therewith, hollow coupling means 1113 such as to act both as an accessory for coupling the container 10, for each containment body 11 or 11', and as a twist off tab, for opening the respective containment body 11.

Furthermore, referring to Figure 7, according to the invention, the method for manufacturing the container 10, for example, when it is carried out using the Blow moulding system, includes the following steps:
- extrusion of the tubular element, for example in plastic material, at the melting temperature of the plastic material used;
- insertion of the tubular element into the mould of the moulding system, said mould comprises two moulding halves;
- closing of a first end of the tubular element, to mould the container 10, so that each one of the first containment bodies 11 is in an inverted position with respect to each one of the second adjacent containment bodies 11', i.e. the first containment bodies 11 and the second containment bodies 11' have the first end 111 and the second end 112', respectively, closed;
- moulding of the container 10.

In detail, by using the moulding method just described, containers will then be made closed only at one end and empty inside.

Furthermore, it is possible to manufacture an empty container, closed also at its second end using an additional step of:
- closing the second end of the container 10, opposite to the first end of the tubular element, so as to seal the first containment bodies 11 and the second containment bodies 11' at the respective second ends 112 and first ends 111'.

Finally, advantageously, similarly to what has just been described, it is possible to carry out the manufacturing method of the container 10, using a BFS or blow moulding process that has all the steps previously analysed with the addition of a further step of:
- filling of the container 10, and therefore of the individual hollow containment bodies 11 and 11', with the substance of interest.

In detail, when this step takes place in the context of the BFS method, the filling takes place at the respective second end 112 and the first end 111', by means of nozzles 52, through the still open portion 51 of the mould (Figure 7), in particular before the step of closing the second end of the container 10.

All the details may be replaced by other technically equivalent elements. In practice, the materials used, as well as the contingent shapes and dimensions, may be varied according to the contingent requirements and the state of the art.

Where the construction features and the techniques mentioned in the following claims are followed by reference marks or numbers, such reference marks or numbers have been affixed with the sole purpose of increasing the intelligibility of the claims themselves and, consequently, they do not constitute in any way a limitation to the interpretation of each element identified, purely by way of example, by such reference marks or numbers.

## Claims

1. Container (10) moulded from a tubular element being able to contain and dispense at least one solid or fluid substance, wherein said container (10) has a longitudinal axis (X) and comprises at least two hollow containment bodies (11, 11'), the first hollow containment body (11) being oriented according to a first orientation direction (L), with respect to said axis (X),
**characterized in that** the second containment body (11') is moulded so as to be adjacent to said first containment body (11) and to create an interaxis between said first containment body (11) and the second containment body (11'), the second containment body (11') being oriented according to a second orientation direction (M), opposite to said first orientation direction (L) of said first containment body (11).

2. Container (10) as claim 1, **characterized in that** said containment bodies (11; 11') comprise respective first ends (111; 111') opposite to each other and corresponding to respective opening sides of said containment bodies (11; 11'), and respective second ends (112; 112'), opposite to said first ends (111; 111'), such as to act as the bottom of said containment bodies (11; 11') wherein, in correspondence of said second ends (112; 112'), there are panels (1121; 1121') integrally moulded with said second ends (112; 112'), for the application of labels or engravings.

3. Container (10) as in the previous claim, **characterized in that** said panels (1121; 1121') have a substantially polygonal and flat shape and are moulded in correspondence with an empty portion between said second ends (112, 112') of said containment bodies (11; 11') on which they are moulded, and a further empty portion at the first ends (111; 111') of the adjacent containment body (11; 11').

4. Container (10) as per at least one of the preceding claims, **characterized in that** each of said containment bodies (11; 11') comprises first ends (111; 111') and, integrally moulded therewith and in correspondence with said first ends (111; 111'), a hollow coupling means (1113) such as to act both as an accessory for coupling and as a twist off tab for opening said containment body (11; 11').

5. Container (10) as per at least one of the preceding claims, **characterized in that** said containment bodies (11; 11') have a substantially longitudinal shape and include at least a tapered portion.

6. Moulding system for containers (10) comprising a mould for moulding a container (10) as per at least one of claims 1-5 1-5 using the BFS or Blow moulding technique.

7. Moulding system for containers (10) as in claim 6, **characterized in** comprising a mould equipped with a central or median area (113) of variable volume capable of increasing the capacity of said containment body (11; 11').

8. Method for manufacturing a container (10) using a moulding system as in claim 7, **characterized in that** it comprises the following steps:
- extrusion of said tubular element at the melting temperature of the material said tubular element is made of;
- insertion of said tubular element into said mould of said moulding system;
- closing of a first end of the tubular element, to mould said container (10), so that a first containment body (11) has a first orientation direction (L) and a second containment body (11') adjacent to the first containment body (11) has a second orientation direction (M) of the body opposite to the first orientation direction (L);
- moulding of the container (10).

9. Method for manufacturing a container (10) as in claim 8, **characterized in that** it comprises, after the step of moulding the container (10), the following step:
- closing of a second end of the tubular element, opposite to said first end of the tubular element, so that the first containment body (11) is closed at its opening (111) and the second containment body (11') is closed at its bottom (112').

10. Method for manufacturing a container (10) as claimed in claim 8 or 9, **characterized in that** it comprises the following step:
- filling of said container (10).

11. Method for manufacturing a container (10) as in claim 10, **characterized in that** the step of filling said container (10) takes place before the step of closing the second end of the tubular element.

## Patentansprüche

1. Behälter (10), der aus einem rohrförmigen Element geformt ist, das in der Lage ist, mindestens eine feste oder flüssige Substanz aufzunehmen und abzugeben, wobei der Behälter (10) eine Längsachse (X) aufweist und mindestens zwei hohle Aufnahmekörper (11, 11') umfasst, wobei der erste hohle Aufnahmekörper (11) gemäß einer ersten Orientierungsrichtung (L) in Bezug auf die Achse (X) ausgerichtet ist,
**dadurch gekennzeichnet, dass** der zweite Einschließungskörper (11') so geformt ist, dass er an den ersten Einschließungskörper (11) angrenzt und eine Zwischenachse zwischen dem ersten Einschließungskörper (11) und dem zweiten Einschließungskörper (11') bildet, wobei der zweite Einschließungskörper (11') gemäß einer zweiten Ausrichtungsrichtung (M) ausgerichtet ist, die der ersten Ausrichtungsrichtung (L) des ersten Einschließungskörpers (11) entgegengesetzt ist.

2. Behälter (10) nach Anspruch 1, **dadurch gekennzeichnet, dass** die Aufnahmekörper (11; 11') jeweilige erste Enden (111; 111') aufweisen, die einander gegenüberliegen und den jeweiligen Öffnungsseiten der Aufnahmekörper (11; 11') entsprechen, und jeweilige zweite Enden (112; 112'), die den ersten Enden (111; 111') gegenüberliegen, so dass sie als Boden der Behälterkörper (11; 11') dienen, wobei in Übereinstimmung mit den zweiten Enden (112; 112') Platten (1121; 1121') vorhanden sind, die integral mit den zweiten Enden (112; 112') geformt sind, um Etiketten oder Gravuren anzubringen.

3. Behälter (10) nach dem vorhergehenden Anspruch, **dadurch gekennzeichnet, dass** die Tafeln (1121; 1121') eine im Wesentlichen polygonale und flache Form haben und in Übereinstimmung mit einem leeren Abschnitt zwischen den zweiten Enden (112, 112') der Behältniskörper (11; 11'), an denen sie geformt sind, und einem weiteren leeren Abschnitt an den ersten Enden (111; 111') des benachbarten Behältniskörpers (11; 11') geformt sind.

4. Behälter (10) nach mindestens einem der vorhergehenden Ansprüche, **dadurch gekennzeichnet, dass** jeder der Aufnahmekörper (11; 11') erste Enden (111; 111') und ein damit einstückig geformtes und mit den ersten Enden (111; 111') korrespondierendes hohles Kupplungsmittel (1113) umfasst, das sowohl als Zubehörteil für die Kupplung als auch als Abdrehlasche zum Öffnen des Aufnahmekörpers (11; 11') dient.

5. Behälter (10) nach mindestens einem der vorhergehenden Ansprüche, **dadurch gekennzeichnet, dass** die Aufnahmekörper (11; 11') eine in der wesentlichen länglichen Form haben und mindestens einen verjüngten Abschnitt aufweisen.

6. Formsystem für Behälter (10) mit einer Form zum Formen eines Behälters (10) nach mindestens einem der Ansprüche 1-5 unter Verwendung der BFS- oder Blasformtechnik.

7. Formsystem für Behälter (10) nach Anspruch 6, **dadurch gekennzeichnet, dass** es eine Form umfasst, die mit einem zentralen oder mittleren Bereich (113) mit variablem Volumen ausgestattet ist, der das Fassungsvermögen des Aufnahmekörpers (11; 11') erhöhen kann.

8. Verfahren zur Herstellung eines Behälters (10) unter Verwendung eines Formsystems gemäß Anspruch 7, **dadurch gekennzeichnet, dass** es die folgenden Schritte umfasst:
- Extrusion des rohrförmigen Elements bei der Schmelztemperatur des Materials, aus dem das rohrförmige Element hergestellt ist;
- Einsetzen des rohrförmigen Elements in die Form des Formsystems;
- Verschließen eines ersten Endes des rohrförmigen Elements, um den Behälter (10) zu formen, so dass ein erster Aufnahmekörper (11) eine erste Ausrichtungsrichtung (L) und ein zweiter Aufnahmekörper (11'), der an den ersten Aufnahmekörper (11) angrenzt, eine zweite Ausrichtungsrichtung (M) des Körpers entgegengesetzt zur ersten Ausrichtungsrichtung (L) aufweist;
- Formung des Behälters (10).

9. Verfahren zur Herstellung eines Behälters (10) nach Anspruch 8, **dadurch gekennzeichnet, dass** es nach dem Schritt des Formens des Behälters (10) den folgenden Schritt umfasst:
- Verschließen eines zweiten Endes des rohrförmigen Elements, das dem ersten Ende des rohrförmigen Elements gegenüberliegt, so dass der erste Aufnahmekörper (11) an seiner Öffnung (111) und der zweite Aufnahmekörper (11') an seinem Boden (112') verschlossen wird.

10. Verfahren zur Herstellung eines Behälters (10) nach Anspruch 8 oder 9, **dadurch gekennzeichnet, dass** es den folgenden Schritt umfasst:
- Befüllen des Behälters (10).

11. Verfahren zur Herstellung eines Behälters (10) nach Anspruch 10, **dadurch gekennzeichnet, dass** der Schritt des Füllens des Behälters (10) vor dem Schritt des Verschließens des zweiten Endes des rohrförmigen Elements erfolgt.

## Revendications

1. Récipient (10) moulé à partir d'un élément tubulaire pouvant contenir et distribuer au moins une substance solide ou fluide, dans lequel ledit récipient (10) présente un axe longitudinal (X) et comprend au moins deux corps de confinement creux (11, 11'), le premier corps de confinement creux (11) étant orienté selon une première direction d'orientation (L), par rapport audit axe (X),
**caractérisé en ce que** le second corps de confinement (11') est moulé de manière à être adjacent audit premier corps de confinement (11) et à créer un interaxe entre ledit premier corps de confinement (11) et le second corps de confinement (11'), le second corps de confinement (11') étant orienté selon une seconde direction d'orientation (M), opposée à ladite première direction d'orientation (L) dudit premier corps de confinement (11).

2. Récipient (10) selon la revendication 1, **caractérisé en ce que** lesdits corps de contention (11; 11') comprennent des premières extrémités respectives (111; 111') opposées l'une à l'autre et correspondant aux côtés d'ouverture respectifs desdits corps de contention (11; 11'), et des deuxièmes extrémités respectives (112; 112'), opposées aux premières extrémités (111; 111'), de manière à constituer le fond desdits corps de contention (11; 11') dans lesquelles, en correspondance desdites secondes extrémités (112; 112'), se trouvent des panneaux (1121; 1121') moulés d'un seul tenant avec lesdites secondes extrémités (112; 112'), pour l'application d'étiquettes ou de gravures.

3. Récipient (10) selon la revendication précédente, **caractérisé en ce que** lesdits panneaux (1121; 1121') ont une forme sensiblement polygonale et plate et sont moulés en correspondance avec une partie vide entre lesdites secondes extrémités (112, 112') desdits corps de contention (11; 11') sur lesquels ils sont moulés, et une autre partie vide aux premières extrémités (111; 111') du corps de contention adjacent (11; 11').

4. Récipient (10) selon au moins l'une des revendications précédentes, **caractérisé en ce que** chacun desdits corps de contention (11; 11') comprend des premières extrémités (111; 111') et, moulé intégralement avec elles et en correspondance avec lesdites premières extrémités (111; 111'), un moyen de couplage creux (1113) tel qu'il agit à la fois comme un accessoire de couplage et comme une languette d'ouverture dudit corps de contention (11; 11').

5. Récipient (10) selon au moins l'une des revendications précédentes, **caractérisé en ce que** lesdits corps de confinement (11; 11') ont une forme sensiblement longitudinale et comprennent au moins une partie conique.

6. Système de moulage de récipients (10) comprenant un moule pour le moulage d'un récipient (10) selon au moins l'une des revendications 1 à 5 en utilisant la technique de moulage BFS ou Blow de moulage par soufflage.

7. Système de moulage de récipients (10) selon la revendication 6, **caractérisé en ce qu'**il comprend un moule équipé d'une zone centrale ou médiane (113) de volume variable capable d'augmenter la capacité dudit corps de contention (11; 11').

8. Procédé de fabrication d'un récipient (10) utilisant un système de moulage tel que celui de la revendication 7, **caractérisé en ce qu'**il comprend les étapes suivantes :
- extrusion dudit élément tubulaire à la température de fusion du matériau dont il est constitué;
- insertion dudit élément tubulaire dans ledit moule dudit système de moulage;
- fermeture d'une première extrémité de l'élément tubulaire, pour mouler ledit récipient (10), de sorte qu'un premier corps de confinement (11) présente une première direction d'orientation (L) et qu'un second corps de confinement (11') adjacent au premier corps de confinement (11) présente une seconde direction d'orientation (M) du corps opposée à la première direction d'orientation (L);
- moulage du récipient (10).

9. Procédé de fabrication d'un récipient (10) selon la revendication 8, **caractérisé en ce qu'**il comprend, après l'étape de moulage du récipient (10), l'étape suivante:
- fermeture d'une deuxième extrémité de l'élément tubulaire, opposée à ladite première extrémité de l'élément tubulaire, de sorte que le premier corps de contention (11) soit fermé au niveau de son ouverture (111) et que le deuxième corps de contention (11') soit fermé au niveau de son fond (112').

10. Procédé de fabrication d'un récipient (10) selon la revendication 8 ou 9, **caractérisé en ce qu'**il comprend l'étape suivante:
- remplissage dudit récipient (10).

11. Procédé de fabrication d'un récipient (10) selon la revendication 10, **caractérisé en ce que** l'étape de remplissage dudit récipient (10) a lieu avant l'étape de fermeture de la deuxième extrémité de l'élément tubulaire.
